# EUROPÄISCHE PATENTANMELDUNG

(11) **EP 3 401 039 A1**
(43) Veröffentlichungstag der Anmeldung: **14.11.2018**
(21) Anmeldenummer: 17170738.3
(22) Anmeldetag: 12.05.2017
(51) Int. Cl.: B22F 7/06, B23K 35/02, H01L 21/67

(54) **VERFAHREN ZUM VERBINDEN VON BAUELEMENTEN MITTELS METALLPASTE**

(71) Anmelder: Heraeus Deutschland GmbH & Co. KG, 63450 Hanau (DE); Heraeus Noblelight GmbH, 63450 Hanau (DE)
(72) Erfinder: SCHMITT, Wolfgang, 63110 Rodgau (DE); SCHÄFER, Michael, 36093 Künzell (DE); DUCH, Susanne Klaudia, 63486 Bruchköbel (DE); CHEW, Ly May, 63486 Bruchköbel (DE); NACHREINER, Jens, 36381 Schlüchtern (DE); ZECH, Dieter, 63801 Kleinostheim (DE); WÖLL, Jörg, 63683 Ortenberg (DE); WEBER, Jürgen, 63801 Kleinostheim (DE)
(74) Vertreter: Heraeus IP

(57) **Zusammenfassung**

Verfahren zum Verbinden von Bauelementen, umfassend die Schritte:
(1) Auftragen einer organisches Lösemittel enthaltenden Metallpaste auf die Kontaktfläche eines ersten Bauelementes,
(2) gegebenenfalls Auftragen der Metallpaste auf die Kontaktfläche eines mit dem ersten Bauelement zu verbindenden zweiten Bauelementes,
(3) Trocknen der auf die Kontaktfläche des ersten und gegebenenfalls auch auf die Kontaktfläche des zweiten Bauelementes aufgetragenen Metallpaste,
(4) Herstellen einer Sandwichanordnung aus den beiden Bauelementen mit der dazwischen befindlichen getrockneten Metallpaste, und
(5) Drucksintern der die Schicht aus getrockneter Metallpaste umfassenden Sandwichanordnung,
dadurch gekennzeichnet, dass das Trocknen unter Bestrahlen mit IR-Strahlung mit einer Peakwellenlänge im Wellenlängenbereich von 750 bis 1500 nm erfolgt.

## Beschreibung

Die Erfindung betrifft ein Verfahren zum Verbinden von Bauelementen mittels Metallpaste.

Im Bereich der Leistungs- und Konsumerelektronik stellt das Verbinden von Bauelementen, die eine hohe Druck- und Temperaturempfindlichkeit aufweisen, eine besondere Herausforderung dar. Aus diesem Grund werden solche druck- und temperaturempfindlichen Bauelemente häufig durch Kleben miteinander verbunden. Die Klebetechnik besitzt jedoch den Nachteil, dass damit Kontaktstellen zwischen den Bauelementen geschaffen werden, die eine nur unzureichende Wärmeleitfähigkeit bzw. elektrische Leitfähigkeit aufweisen.

Eine bekannte Lösung dieses Problems besteht darin, zu verbindende Bauelemente durch Drucksintern zu verbinden. Drucksintern stellt ein sehr einfaches Verfahren zum stabilen Verbinden von Bauelementen dar. Dabei wird üblicherweise eine organisches Lösemittel enthaltende Metallpaste auf die zu verbindende Kontaktfläche eines der oder beider der zu verbindenden Bauelemente aufgetragen und zunächst getrocknet, üblicherweise in einem Umluftofen. Der Trocknungsvorgang benötigt dabei eine Zeitdauer üblicherweise im Bereich von 10 bis 30 Minuten bei Ofentemperaturen im Bereich von 80 bis 150 °C. Danach werden die zu verbindenden Kontaktflächen zueinander gewandt mit der dazwischen befindlichen getrockneten Metallpaste miteinander in Kontakt gebracht unter Ausbildung einer Sandwichanordnung. Es folgt ein bei erhöhter Temperatur durchgeführter Drucksinterschritt, in dessen Verlauf die feste mechanische Verbindung zwischen den Bauelementen entsteht. Das Drucksintern kann beispielsweise unter Verwendung einer beheizten Sinterpresse, in einem eine Pressvorrichtung beispielsweise in Gestalt eines Stempels aufweisenden Ofen oder in einem Überdruckofen erfolgen.

Es hat sich gezeigt, dass durch das nachfolgend offenbarte erfindungsgemäße Verfahren die Trocknungsdauer vor dem eigentlichen Drucksintern erheblich verkürzt werden kann.

Es handelt sich bei dem erfindungsgemäßen Verfahren um ein Verfahren zum Verbinden von Bauelementen, umfassend die Schritte:
(1) Auftragen einer organisches Lösemittel enthaltenden Metallpaste auf die Kontaktfläche eines ersten Bauelementes,
(2) gegebenenfalls Auftragen der Metallpaste auf die Kontaktfläche eines mit dem ersten Bauelement zu verbindenden zweiten Bauelementes,
(3) Trocknen der auf die Kontaktfläche des ersten und gegebenenfalls auch auf die Kontaktfläche des zweiten Bauelementes aufgetragenen Metallpaste,
(4) Herstellen einer Sandwichanordnung aus den beiden Bauelementen mit der dazwischen befindlichen getrockneten Metallpaste, und
(5) Drucksintern der die Schicht aus getrockneter Metallpaste umfassenden Sandwichanordnung,
dadurch gekennzeichnet, dass das Trocknen unter Bestrahlen mit IR-Strahlung (Infrarotstrahlung) mit einer Peakwellenlänge im Wellenlängenbereich von 750 bis 1500 nm erfolgt.

Das erfindungsgemäße Verfahren umfasst die Schritte (1) bis (5). Dabei handelt es sich insbesondere um aufeinander folgende Schritte, speziell um direkt aufeinander folgende Schritte ohne Zwischenschritte.

Im Rahmen der Erfindung soll der Begriff Bauelement vorzugsweise Einzelteile umfassen. Diese Einzelteile sind vorzugsweise nicht weiter zerlegbar.

Die Bauelemente haben jeweils eine, gegebenenfalls auch mehrere Kontaktflächen. Die Kontaktflächen sind im Allgemeinen metallisch, beispielsweise in Form einer Metallisierungsschicht. Das Metall der Bauelemente oder der Kontaktflächen kann reines Metall oder eine Legierung des Metalls sein. Beispiele für das Metall sind Aluminium, Kupfer, Silber, Gold, Nickel, Palladium, Eisen und Platin.

Die Kontaktfläche der im erfindungsgemäßen Verfahren verwendeten Bauelemente kann im Bereich von beispielsweise 1 bis 150 mm² liegen.

Das erste und das damit zu verbindende zweite Bauelement können von derselben Art sein, d.h. es kann sich beispielsweise in beiden Fällen um Substrate handeln, oder es handelt sich jeweils um aktive oder passive Bauelemente oder um ein aktives und ein passives Bauelement. Es kann aber auch sein, dass es sich bei dem einen Bauelement um ein Substrat und bei dem anderen Bauelement um ein aktives oder passives Bauelement handelt, oder umgekehrt. Bei den Substraten, den aktiven und den passiven Bauelementen handelt es sich insbesondere um Teile, die in der Elektronik verwendet werden.

Beispielsweise lassen sich so folgende Ausführungsformen unterscheiden:

| **Erstes Bauelement:** | **Zweites Bauelement:** |
|---|---|
| Substrat | Substrat |
| Aktives Bauelement | Passives Bauelement |
| Passives Bauelement | Aktives Bauelement |
| Aktives Bauelement | Aktives Bauelement |
| Passives Bauelement | Passives Bauelement |
| Substrat | Aktives Bauelement |
| Substrat | Passives Bauelement |
| Passives Bauelement | Substrat |
| Aktives Bauelement | Substrat |

Beispiele für Substrate sind IMS-Substrate (insulated metal-Substrate), DCB-Substrate (direct copper bonded-Substrate), AMB-Substrate (active metal braze-Substrate), keramische Substrate, PCBs (printed circuit boards) und Leadframes.

Beispiele für aktive Bauelemente sind Dioden, LEDs (light emitting diodes, lichtemittierende Dioden), Dies (Halbleiterchips), IGBTs (insulated-gate bipolar transistors, Bipolartransistoren mit isolierter Gate-Elektrode), ICs (integrated circuits, integrierte Schaltungen) und MOSFETs (metal-oxide-semiconductor field-effect transistors, Metall-Oxid-Halbleiter-Feldeffekttransistoren).

Beispiele für passive Bauelemente sind Sensoren, Bodenplatten, Kühlkörper, Widerstände, Kondensatoren und Spulen.

In Schritt (1) des erfindungsgemäßen Verfahrens wird eine organisches Lösemittel enthaltende Metallpaste auf die Kontaktfläche eines ersten Bauelementes aufgetragen.

Bei der organisches Lösemittel enthaltenden Metallpaste handelt es sich um eine übliche dem Fachmann als Mittel zur Herstellung einer Sinterverbindung zwischen Bauelementen bzw. deren Kontaktflächen bekannte Metallpaste, auch bezeichnet als Metallsinterpaste. Solche Metallpasten enthalten beispielsweise 25 bis 90 Gew.-% sinterfähige Metallpartikel, insbesondere Silber-, Silberlegierungs-, Kupfer- und/oder Kupferlegierungspartikel; 5 bis 30 Gew.-% organisches Lösemittel; 0 bis 65 Gew.-% Metallvorläuferverbindungen (Metallprekursoren), insbesondere Silberoxid, Silbercarbonat; 0 bis 5 Gew.-% Sinterhilfsmittel, beispielsweise Peroxide, Formiate; und 0 bis 5 Gew.-% andere Additive, beispielsweise gesättigte Fettsäuren und/oder Polymere wie Ethylcellulose oder Polyimid.

Solche Metallpasten sind in vielfältigen Ausführungsformen beispielsweise in WO 2016/071005 A1, EP 3 009 211 A1, WO 2016/028221 A1, WO 2015/193014 A1, WO 2014/177645 A1, WO 2014/170050 A1, WO 2011/026624 A1, WO 2011/026623 A1, EP 2 572 814 A1, EP 2 425 920 A1 und EP 2 158 997 A2 offenbart.

Die Auftragung der Metallpaste auf die Kontaktfläche des ersten Bauelements kann mittels herkömmlicher Verfahren erfolgen, beispielsweise mittels Druckverfahren wie Siebdruck, Schablonendruck oder Jetten. Andererseits kann die Auftragung der Metallpaste auch mittels Dispenstechnik, mittels Pintransfer oder durch Dippen erfolgen.

Das erfindungsgemäße Verfahren umfasst einen optionalen Schritt (2). Falls Schritt (2) stattfindet, so wird die schon vorerwähnte Metallpaste auch auf die Kontaktfläche des zweiten Bauelementes aufgetragen. Mögliche Auftragungsmethoden sind die schon Vorerwähnten.

Die Nassschichtdicke der Schicht der Metallpaste kann vorzugsweise im Bereich von 20 bis 200 µm liegen. Die Nassschichtdicke kann beispielsweise abhängig sein vom gewählten Verfahren zum Auftragen der Metallpaste. Bei Auftrag der Metallpaste mittels Siebdruckverfahren kann die Nassschichtdicke beispielsweise im Bereich von 20 bis 50 µm liegen, bei Schablonendruck beispielsweise im Bereich von 50 bis 200 µm, bei Dispensauftrag beispielsweise im Bereich von 20 bis 100 µm und bei Auftrag durch Jetten beispielsweise im Bereich von 20 bis 70 µm.

In Schritt (3) des erfindungsgemäßen Verfahrens wird die auf die Kontaktfläche des ersten und gegebenenfalls auch auf die Kontaktfläche des zweiten Bauelementes aufgetragene Metallpaste getrocknet. Bei der Trocknung wird organisches Lösemittel aus der Metallpaste entfernt. Gemäß einer bevorzugten Ausführungsform liegt der Anteil an organischem Lösemittel in der getrockneten Metallpaste beispielsweise bei 0 bis 5 Gew.-% oder 0 bis <1 Gew.-% bezogen auf den ursprünglichen Anteil an organischem Lösemittel in der Metallpaste, d.h. applikationsbereiten Metallpaste. Mit anderen Worten, gemäß dieser bevorzugten Ausführungsform werden beispielsweise 95 bis 100 Gew.-% oder >99 bis 100 Gew.-% des oder der ursprünglich in der Metallpaste enthaltenen organischen Lösemittel bei der Trocknung entfernt.

Es ist erfindungswesentlich, dass das Trocknen unter Bestrahlen mit IR-Strahlung mit einer Peakwellenlänge im Wellenlängenbereich von 750 bis 1500 nm, bevorzugt von 750 bis 1200 nm erfolgt. Falls gewünscht, kann zugleich eine unterstützende Ofentrocknung wie im Stand der Technik üblich stattfinden, dies ist jedoch weder notwendig noch bevorzugt. Mit anderen Worten, es ist nicht nur möglich, sondern auch bevorzugt das Trocknen durch das Bestrahlen mit IR-Strahlung mit einer Peakwellenlänge im Wellenlängenbereich von 750 bis 1500 nm, bevorzugt von 750 bis 1200 nm zu bewirken, insbesondere alleine durch besagtes Bestrahlen.

Beispiele für verwendbare Strahlungsquellen für solche IR-Strahlung umfassen übliche NIR-Strahler (Nahinfrarot-Strahler). Solche NIR-Strahler sind beispielsweise von Heraeus erhältlich. Es kann sich bei den NIR-Strahlern beispielsweise um Hochleistungskurzwellenstrahler handeln. Der oder die einzelnen NIR-Strahler können mit einer Leistung beispielsweise im Bereich von 15 bis 100 W/cm (Watt pro Zentimeter Strahlerlänge), bevorzugt im Bereich von 20 bis 50 W/cm betrieben werden. Die Strahleroberflächentemperatur (Glühwendeltemperatur) der NIR-Strahler liegt dabei beispielsweise im Bereich von 1800 bis 3000 °C, bevorzugt im Bereich von 1850 bis 2500 °C. Geeignete NIR-Strahler haben beispielsweise ein Emissionsspektrum mit einem Maximum im Bereich von 750 bis 1500 nm, bevorzugt von 750 bis 1200 nm, insbesondere zwischen 750 und 1500 nm oder zwischen 750 und 1200 nm.

Die IR-Bestrahlung kann statisch oder in einer Durchlaufanlage erfolgen, wobei die zu bestrahlenden mit zu trocknender Metallpaste versehenen Bauelemente und/oder die IR-Strahlungsquelle oder -quellen relativ zueinander bewegt werden.

Der Abstand zwischen IR-Strahlungsquelle(n) oder - genauer - zwischen Strahlenaustrittsfläche der IR-Strahlungsquelle oder -quellen und der zu trocknenden Schicht der Metallpaste liegt beispielsweise im Bereich von 1 bis 50 cm, bevorzugt 5 bis 20 cm.

Der durch die IR-Bestrahlung bewirkte Trocknungsvorgang benötigt eine Zeitdauer beispielsweise im Bereich von lediglich 0,5 bis 3 Minuten und ist damit bedeutend kürzer als im Falle der vorerwähnten Ofentrocknung gemäß Stand der Technik. Qualitätsnachteile entstehen keine beim Vergleich mit der alleinigen Ofentrocknung. Der Fachmann kann die Trocknungsdauer dabei so auswählen, dass ein Sintern oder Ansintern der trocknenden oder getrockneten Metallpaste vermieden werden kann.

Schritt (3) kann in einer Atmosphäre erfolgen, die keinen besonderen Beschränkungen unterliegt. So kann das Trocknen in einer Atmosphäre durchgeführt werden, die Sauerstoff enthält, beispielsweise Luft. Vermutlich als Folge der durch das erfindungsgemäße Verfahren ermöglichten vergleichsweise kurzen Trocknungsdauer kann selbst im Falle von Bauelementen mit an sich oxidationsempfindlicher Kontaktfläche, wie beispielsweise einer Kupfer- oder Nickelkontaktfläche, in sauerstoffhaltiger Atmosphäre, beispielsweise Luft gearbeitet werden.

Falls gewünscht, ist es selbstverständlich auch möglich, das Trocknen in sauerstofffreier Atmosphäre durchzuführen. Unter sauerstofffreier Atmosphäre ist im Rahmen der Erfindung eine Atmosphäre zu verstehen, deren Sauerstoffgehalt nicht mehr als 100 Vol.-ppm (Volumen-ppm), vorzugsweise nicht mehr als 10 Vol.-ppm und noch mehr bevorzugt nicht mehr als 1 Vol.-ppm beträgt.

In Schritt (4) des erfindungsgemäßen Verfahrens wird eine Sandwichanordnung aus den beiden Bauelementen mit der zwischen den beiden Bauelementen befindlichen getrockneten Metallpaste hergestellt. Dazu wird entweder das erste Bauelement mit seiner mit der getrockneten Metallpaste versehenen Kontaktfläche auf die gegebenenfalls ebenfalls mit der getrockneten Metallpaste versehene Kontaktfläche des zweiten Bauelements aufgesetzt oder das zweite Bauelement wird mit seiner gegebenenfalls mit der getrockneten Metallpaste versehenen Kontaktfläche auf die mit der getrockneten Metallpaste versehene Kontaktfläche des ersten Bauelements aufgesetzt. Im Ergebnis befindet sich getrocknete Metallpaste bzw. eine Schicht getrockneter Metallpaste zwischen den zu verbindenden Bauelementen.

In Schritt (5) des erfindungsgemäßen Verfahrens wird die die Schicht der getrockneten Metallpaste umfassende Sandwichanordnung druckgesintert, beispielsweise bei Temperaturen im Bereich von 200 bis 260 °C, einem Pressdruck beispielsweise im Bereich von 3 bis 30 MPa und für eine Zeitdauer beispielsweise im Bereich von 1 bis 5 Minuten. Dabei können die üblichen schon in der den Stand der Technik zum Drucksintern beschreibenden Einleitung vorerwähnten Vorrichtungen Verwendung finden.

Wie schon zu Schritt (3) ausgeführt, so kann auch Schritt (5) in einer Atmosphäre erfolgen, die keinen besonderen Beschränkungen unterliegt. So können Trocknen und Drucksintern in einer Atmosphäre durchgeführt werden, die Sauerstoff enthält, beispielsweise Luft. Falls gewünscht, ist es selbstverständlich auch möglich, das Drucksintern in sauerstofffreier Atmosphäre durchzuführen.

Zusammenfassend ist festzustellen, dass das erfindungsgemäße Verfahren zum Verbinden von Bauelementen Vorteile gegenüber dem Stand der Technik aufweist, nämlich eine Verkürzung der Trocknungsdauer ohne Qualitätseinbußen und die Nichtnotwendigkeit einer Inertisierung selbst im Falle des Arbeitens mit Bauelementen mit oxidationsempfindlicher Kontaktfläche, beispielsweise Kupfer- oder Nickelkontaktfläche.

### Beispiele und Vergleichsbeispiele:

1. Herstellung einer Metallpaste: 85 Gew.-Teile Silberpartikel (mit 0,6 Gew.-% Laurinsäure/Stearinsäure im Gewichtsverhältnis 25:75 gecoatete Silberflakes), 7,4 Gew.-Teile α-Terpineol, 7,4 Gew.-Teile Iso-Tridecanol und 0,2 Gew.-Teile Ethylcellulose wurden zu einer Metallpaste vermischt.
2. Applikation der Metallpaste: Die Metallpaste wurde mittels Schablonendruck auf ein DCB-Substrat in einer Nassschichtdicke von 75 µm und mit einer Fläche von 4 mm · 4 mm vollflächig appliziert.
3a. Trocknung der applizierten Metallpaste in einem Ofen: Das gemäß 2. bedruckte DCB-Substrat wurde unter Stickstoffatmosphäre bei 130 °C Ofentemperatur getrocknet bis auf einen Restlösemittelgehalt der Metallpaste von < 0,5 Gew.-%, bezogen auf ursprünglich in der Metallpaste enthaltenes organisches Lösemittel (gravimetrisch bestimmt). Der Trocknungsvorgang benötigte 15 Minuten.
3b. Trocknung der applizierten Metallpaste unter IR-Bestrahlung: Das gemäß 2. bedruckte DCB-Substrat wurde aus einem Abstand von 10 cm mit einem NIR-Strahler einer Länge von 30 cm, einer Leistung von 30 W/cm, einer Filamenttemperatur von 2009°C und mit einer Peakwellenlänge von 1100 nm von oberhalb der Metallpaste an der Luft bestrahlt und so vom organischen Lösemittel befreit bis auf einen Restlösemittelgehalt von < 0,5 Gew.-%, bezogen auf ursprünglich in der Metallpaste enthaltenes organisches Lösemittel (gravimetrisch bestimmt). Der alleine durch die IR-Bestrahlung bewirkte Trocknungsvorgang benötigte 1,5 Minuten.
4a bzw. 4b. Herstellung einer Sandwichanordnung: Auf die gemäß 3a bzw. 3b getrocknete Metallpaste wurde ein Siliziumchip bei 130 °C mit seiner Silberkontaktfläche von 4 mm · 4 mm unter Bildung einer Sandwichanordnung mit einer gemeinsamen Überlappungsfläche von DCB-Substrat und Chip von 4 mm · 4 mm aufgesetzt.
5. Drucksintern der gemäß 4a bzw. 4b hergestellten Sandwichanordnung: Die in 4a bzw. 4b. geschaffene Sandwichanordnung wurde unter Verwendung einer beheizten Sinterpresse 2 Minuten bei 230 °C und einem Preßdruck von 10 MPa unter Luftatmosphäre druckgesintert.

Nach dem Abkühlen wurde die Haftung über die Scherfestigkeit bestimmt. Dabei wurden die Siliziumchips mit einem Schermeißel bei einer Geschwindigkeit von 0,3 mm/s bei 260 °C abgeschert. Die Kraft wurde mittels einer Kraftmessdose aufgenommen (Gerät DAGE 2000 der Firma DAGE, Deutschland). Scherfestigkeiten über 20 N/mm² stellen zufriedenstellende Ergebnisse dar.
Gemessene Scherfestigkeit 5a: 62 N/mm²
Gemessene Scherfestigkeit 5b: 64 N/mm²

## Patentansprüche

1. Verfahren zum Verbinden von Bauelementen, umfassend die Schritte:
(1) Auftragen einer organisches Lösemittel enthaltenden Metallpaste auf die Kontaktfläche eines ersten Bauelementes,
(2) gegebenenfalls Auftragen der Metallpaste auf die Kontaktfläche eines mit dem ersten Bauelement zu verbindenden zweiten Bauelementes,
(3) Trocknen der auf die Kontaktfläche des ersten und gegebenenfalls auch auf die Kontaktfläche des zweiten Bauelementes aufgetragenen Metallpaste,
(4) Herstellen einer Sandwichanordnung aus den beiden Bauelementen mit der dazwischen befindlichen getrockneten Metallpaste, und
(5) Drucksintern der die Schicht aus getrockneter Metallpaste umfassenden Sandwichanordnung,
**dadurch gekennzeichnet, dass** das Trocknen unter Bestrahlen mit IR-Strahlung mit einer Peakwellenlänge im Wellenlängenbereich von 750 bis 1500 nm erfolgt.

2. Verfahren nach Anspruch 1, wobei die Kontaktfläche der Bauelemente im Bereich von 1 bis 150 mm² liegt.

3. Verfahren nach Anspruch 1 oder 2, wobei die Bauelemente ausgewählt sind aus der Gruppe bestehend aus Substraten, aktiven Bauelementen und passiven Bauelementen.

4. Verfahren nach einem der vorhergehenden Ansprüche, wobei die in Schritt (1) und gegebenenfalls Schritt (2) aufgetragene Metallpaste 25 bis 90 Gew.-% sinterfähige Metallpartikel, 5 bis 30 Gew.-% organisches Lösemittel, 0 bis 65 Gew.-% Metallvorläuferverbindungen, 0 bis 5 Gew.-% Sinterhilfsmittel und 0 bis 5 Gew.-% andere Additive enthält.

5. Verfahren nach einem der vorhergehenden Ansprüche, wobei während Schritt (3) 95 bis 100 Gew.-% des oder der ursprünglich in der Metallpaste enthaltenen organischen Lösemittel entfernt werden.

6. Verfahren nach einem der vorhergehenden Ansprüche, wobei die Peakwellenlänge im Wellenlängenbereich von 750 bis 1200 nm liegt.

7. Verfahren nach einem der vorhergehenden Ansprüche, wobei das Trocknen alleine durch das Bestrahlen mit der IR-Strahlung bewirkt wird.

8. Verfahren nach einem der vorhergehenden Ansprüche, wobei ein oder mehrere mit einer Leistung im Bereich von 15 bis 100 W/cm betriebene NIR-Strahler als Strahlungsquellen für die IR-Strahlung verwendet werden.

9. Verfahren nach Anspruch 8, wobei die Strahleroberflächentemperatur des oder der NIR-Strahler im Bereich von 1800 bis 3000 °C liegt.

10. Verfahren nach einem der vorhergehenden Ansprüche, wobei der Abstand zwischen der Strahlenaustrittsfläche der IR-Strahlungsquelle oder -quellen und der Schicht der zu trocknenden Metallpaste im Bereich von 1 bis 50 cm liegt.

11. Verfahren nach einem der vorhergehenden Ansprüche, wobei das Trocknen gemäß Schritt (3) 0,5 bis 3 Minuten dauert.

12. Verfahren nach einem der vorhergehenden Ansprüche, wobei Schritt (3) und/oder Schritt (5) in einer Sauerstoff enthaltenden oder in sauerstofffreier Atmosphäre durchgeführt werden, wobei in beiden Fällen eines der oder beide Bauelemente eine oxidationsempfindliche Kontaktfläche besitzen können.
